# EUROPEAN PATENT APPLICATION

(11) **EP 3 668 087 A1**
(43) Date of publication of application: **17.06.2020**
(21) Application number: 18212530.2
(22) Date of filing: 14.12.2018
(51) Int. Cl.: H04N 7/18, G06F 3/048, G09G 5/00

(54) **VIDEO MONITORING SYSTEM WORKSPACE**

(71) Applicant: Carrier Corporation, Palm Beach Gardens, FL 33418 (US)
(72) Inventor: Dobrowolski, Jaroslaw, Palm Beach Gardens, FL Florida 33418 (US)
(74) Representative: Schmitt-Nilson Schraud Waibel Wohlfrom Patentanwälte Partnerschaft mbB

(57) **Abstract**

A method for customizing a user interface to a video monitoring system having a camera incudes defining a window in a workspace; creating a tab in the window; assigning a component to the tab; wherein the component comprises a camera component; wherein the camera component displays video from the camera.

## Description

### BACKGROUND

The subject matter disclosed herein generally relates to video monitoring systems and, more particularly, to a customizable workspace for a video monitoring system.

Video monitoring systems (also referred to as surveillance systems) include one or more cameras and a display that allows a user to view video (live or recorded) from the one or more cameras. Existing user interfaces for video monitoring systems have little or no customizability. The user interfaces "are limited and based on pre-defined layout templates. As a result, existing user interfaces may not fulfill user needs in terms of personalization. This has a direct impact on user experience and productivity.

### SUMMARY

According to an embodiment, a method for customizing a user interface to a video monitoring system having a camera incudes defining a window in a workspace; creating a tab in the window; assigning a component to the tab; wherein the component comprises a camera component; wherein the camera component displays video from the camera.

In addition to one or more of the features described herein, or as an alternative, further embodiments of the method may include wherein assigning the component to the tab comprises assigning a first component to the tab and assigning a second component to the tab; wherein the first component in the tab and the second component in the tab are in communication.

In addition to one or more of the features described herein, or as an alternative, further embodiments of the method may include wherein creating the tab in the window comprises creating a first tab and creating a second tab; wherein assigning the component comprises assigning a first component to the first tab and assigning a second component to the second tab; wherein the first component in the first tab and the second component in the second tab are in communication.

In addition to one or more of the features described herein, or as an alternative, further embodiments of the method may include wherein defining the window comprises defining a first window and defining a second window; creating the tab comprises creating a first tab in the first window and creating a second tab in the second window; wherein assigning the component comprises assigning a first component to the first tab of the first window and assigning a second component to the second tab of the second window; wherein the first component in the first tab of the first window and the second component in the second tab of the second window are in communication.

In addition to one or more of the features described herein, or as an alternative, further embodiments of the method may include assigning a second component to the tab.

In addition to one or more of the features described herein, or as an alternative, further embodiments of the method may include wherein the second component comprises a camera control component configured to control at least one parameter of the camera.

In addition to one or more of the features described herein, or as an alternative, further embodiments of the method may include wherein the second component comprises a device listing component identifying devices in the video monitoring system.

In addition to one or more of the features described herein, or as an alternative, further embodiments of the method may include wherein the second component comprises a settings component presenting settings configurable in the video monitoring system.

According to another embodiment, a video monitoring system includes a camera; a controller in communication with the camera, the controller configured to provide a user interface to a remote system, the user interface comprising: a window in a workspace; a tab in the window; a component to the tab; wherein the component comprises a camera component; wherein the camera component displays video from the camera.

In addition to one or more of the features described herein, or as an alternative, further embodiments of the system may include wherein the component comprises a first component in the tab and a second component in the tab; wherein the first component in the tab and the second component in the tab are in communication.

In addition to one or more of the features described herein, or as an alternative, further embodiments of the system may include wherein the window comprises a first tab and a second tab; wherein the component comprises a first component in the first tab and a second component in the second tab; wherein the first component in the first tab and the second component in the second tab are in communication.

In addition to one or more of the features described herein, or as an alternative, further embodiments of the system may include wherein the window comprises a first window and a second window; the tab comprises a first tab in the first window and a second tab in the second window; the component comprises a first component in the first tab of the first window and a second component in the second tab of the second window; wherein the first component in the first tab of the first window and the second component in the second tab of the second window are in communication.

In addition to one or more of the features described herein, or as an alternative, further embodiments of the system may include wherein the user interface includes a second component.

In addition to one or more of the features described herein, or as an alternative, further embodiments of the system may include wherein the second component comprises a camera control component configured to control at least one parameter of the camera.

In addition to one or more of the features described herein, or as an alternative, further embodiments of the system may include wherein the second component comprises a device listing component identifying devices in the video system.

In addition to one or more of the features described herein, or as an alternative, further embodiments of the system may include wherein the second component comprises a settings component presenting settings configurable in the video system.

According to another embodiment, a computer program product for customizing a user interface to a video monitoring system having a camera, the computer program product comprising a non-transitory computer readable storage medium having program instructions embodied therewith, the program instructions executable by a processor to cause the processor to implement operations including defining a window in a workspace; creating a tab in the window; assigning a component to the tab; wherein the component comprises a camera component; wherein the camera component displays video from the camera.

Technical effects of embodiments of the present disclosure include the ability for a user to customize a user interface to a video monitoring system by defining one or more windows, each window including one or more tabs, where each tab includes components in communication with other components.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a video monitoring system in an example embodiment;
FIG. 2 depicts a process for configuring a user interface in an example embodiment;
FIG. 3 depicts defining a window of a workspace in an example embodiment;
FIG. 4 depicts components assigned to a tab in a window in an example embodiment;
FIG. 5 depicts example components in a window in an example embodiment; and
FIG. 6 depicts a multi-window workspace of the user interface in an example embodiment.

### DETAILED DESCRIPTION

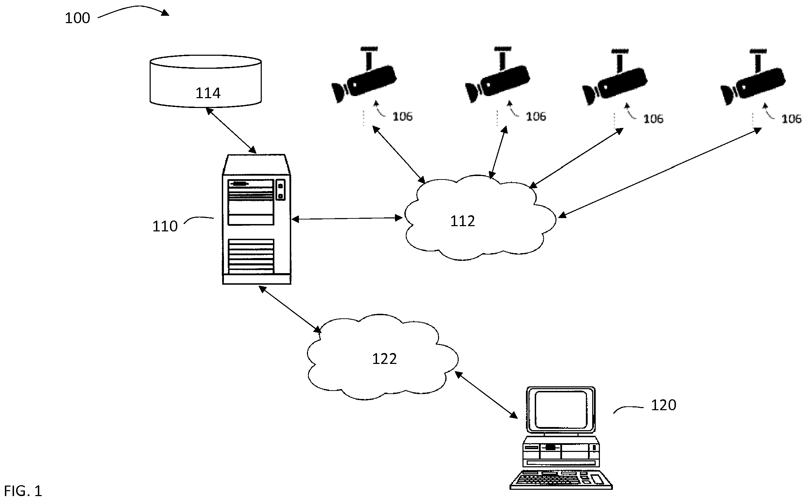

FIG. 1 depicts a video monitoring system 100 in an example embodiment. The video monitoring system 100 includes one or more cameras 106 that acquire video of one or more locations. The video monitoring system 100 may be a surveillance system for security purposes. The cameras 106 communicate with a controller 110 over a network 112. The controller 110 may be implemented using known devices, such as a processor-based device (e.g., server, personal computer, application specific controller, etc.) that executes software to implement the functions described herein. The network 112 may be a wired and/or wireless network, such as a LAN, WAN, WiFi, Zigbee, BLE, etc. The network 112 may be implemented by cabling connecting the cameras 106 to the controller 110. A storage device 114 may be used to store video obtained from the cameras 106. The storage device 114 may be part of the controller 110 or may be a separate component in communication with the controller 110.

The controller 110 is in communication with a remote system 120 over a network 122. The remote system 120 may be implemented using known devices, such as a processor-based device (e.g., personal computer, laptop, tablet, smart phone, etc.) that executes software to implement the functions described herein. The network 112 may be a wired and/or wireless network, such as a LAN, WAN, WiFi, Zigbee, the Internet, etc. The network 122 may be implemented by cabling connecting the remote system 120 to the controller 110. In example embodiments, remote system 120 communicates with the controller 110 over network 112. Although a single remote system 120 is shown, it is understood that multiple remote systems 120 may access the controller 110.

The remote system 120 may execute a software application (e.g., a web browser) to connect with the controller 110. The controller 110 provides a network-based, user interface to the remote system 120. This allows the remote system 120 to access the controller 110 without the need to install any software on the remote system 120. In other embodiments, the remote system 120 is also a host of the user interface (e.g., a web application). The remote system 120 executes a web browser to open the web application and connects to a local host in order to open user interface. This scenario is similar to one when the user would use the controller 110 as a remote system 120, such as, using web browser to connect to its own host in order to receive the user interface. The user interface provides for the presentation of video from a plurality of cameras 106 (live or recorded), control of the cameras 106, and other features as described herein.

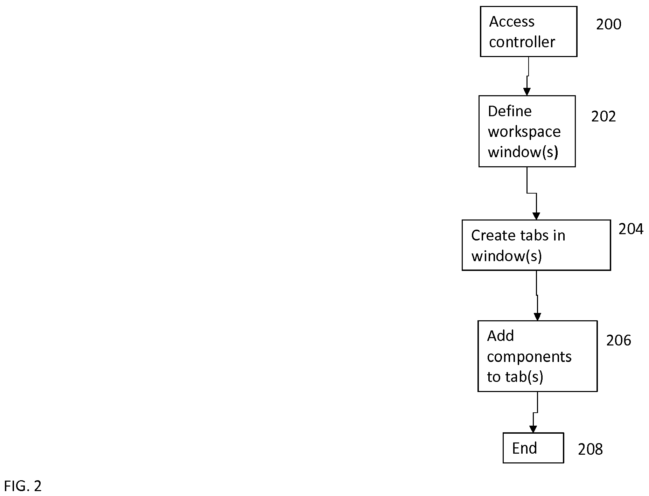

The user interface to the video monitoring system 100 is highly customizable and allows users of the remote system 120 to configure the user interface in a personalized manner. FIG. 2 depicts a process for configuring a user interface in an example embodiment. The process begins at 200 where the remote system 120 accesses controller 110, for example, through a web browser. At 202, the user at the remote system 120 defines one or more windows of a workspace.

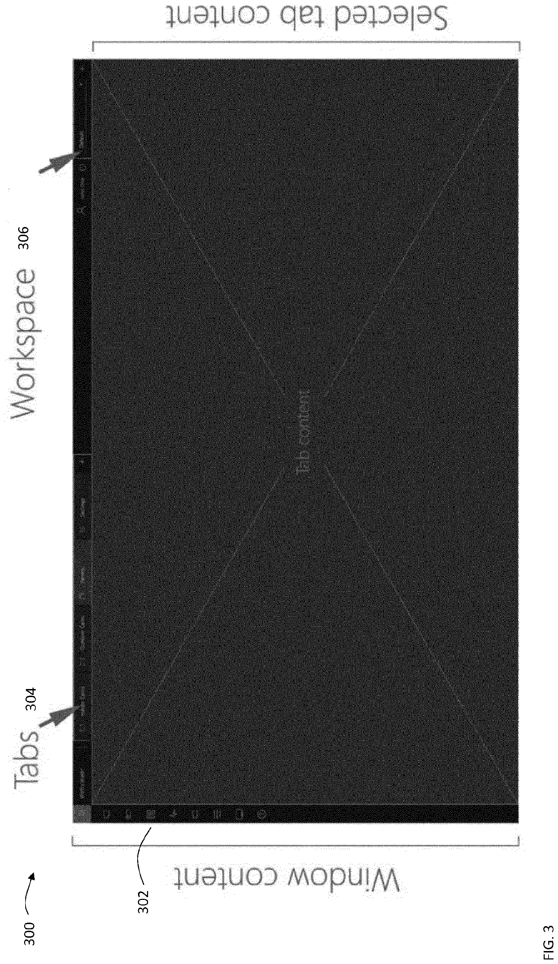

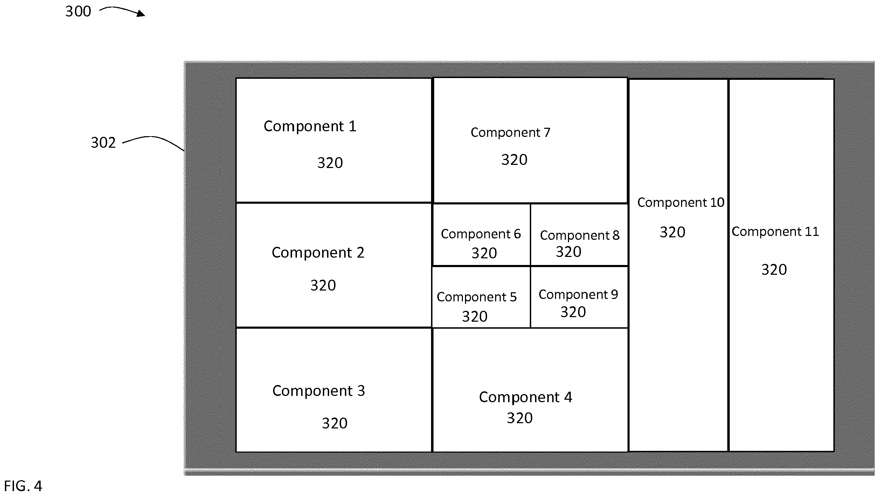

FIG. 3 depicts a workspace 300 having a window 302 in an example embodiment. Although the example in FIG. 3 depicts a single window 302, other embodiments may include any number of windows 302, as described in further detail herein. Windows 302 may be displayed on separate display devices. Referring back the FIG. 2, at 204 the user may create one or more tabs 304 (FIG. 3) within the window 302. Each tab 304 includes its own content in the form of one or more components 320 (FIG. 4). The tabs 304 may be created or removed as the user sees fit. Tabs 304 may be assigned a tab identifier (e.g., a tab name, tab icon, etc.). A workspace icon 306 allows a user to name and save the workspace 300, including all windows 302 and tabs 304. The workspace icon 306 also allows a user to retrieve a previously saved workspace 300 by entering the name of a previously saved workspace 300.

Referring back to FIG. 2, at 206 the user at the remote system 120 assigns one or more components to the one or more tabs 304 in the one or more windows 302 of the workspace 300. The components may include a camera component, a camera control component, a device listing component and a settings component. When a camera component is assigned to a tab 304, the controller 110 provides the output of an identified camera 106 to the remote system 120 to that tab 304. The video provided to the remote system 120 may be live or recorded, as controlled by the user of the remote system 120 through the camera component.

When a camera control component is assigned to a tab 304, a single camera 106 is identified for that camera control component. The camera control component allows a user at the remote system to control one or more parameters of the identified camera 106. The features may include pan, tilt, zoom, video definition, contrast, white balance, etc.

The device listing component identifies devices in the video monitoring system 100. The settings component provides a user at the remote system 120 access to any of the settings of the video monitoring system 100 configurable by the controller 110. Once the components are all assigned, the process ends at 208. The user may edit the workplace 300, or create a new workplace 300, by performing the process of FIG. 2.

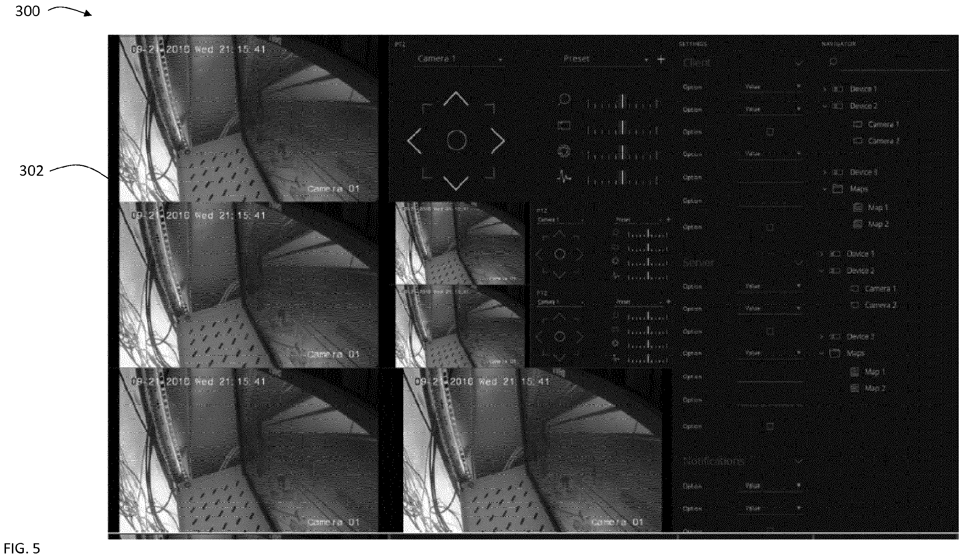

FIG. 4 depicts components, generally referred to as component 320, placed in a window 302 of workplace 300 in an example embodiment. In this example, the user at the remote system 120 has assigned eleven components 320 to the window 302 of the workspace 300. FIG. 5 depicts example components 320 in the window 302 in an example embodiment. Components 1-6 of FIG. 4 are camera components in FIG. 5. Components 7-9 of FIG. 4 are camera control components in FIG. 5. Component 10 of FIG. 4 is a settings component in FIG. 5. Component 11 of FIG. 4 is a device listing component in FIG. 5. The embodiments in FIG. 4 and FIG. 5 are examples only; it should be understood that many different configurations of the user interface may be created by a user.

One aspect of embodiments is the ability for components 320 to communicate. Within a tab 304, components 320 communicate and interact to affect operation of each component 320. For example, use of camera control component 7 of FIG. 4 will alter the video provided in camera component 1. Communication is also provided between components 320 in different tabs 304. Communication is also provided between components 320 in different windows 302. Thus, the workspace 300, even if divided over multiple windows 302, each window 302 having multiple tabs 304, provides communication between all the assigned components 320. For example, an alarm generated by a first component 320 in a first tab 304 of a first window 302 can trigger a video preview at a second component 320 in a second tab 304 of a second window 302. Similarly, camera control commands entered at a first component 320 in a first tab 304 of a first window 302 can alter video presented at a second component 320 in a second tab 304 of a second window 302. Similarly, settings entered at a first component 320 in a first tab 304 of a first window 302 can alter operation of a second component 320 in a second tab 304 of a second window 302. The interaction between components 320 may be within a single tab 304 (e.g., intra-tab communication), between two tabs 304 of the same window (e.g., intra-window communication) and/or between two tabs 304 of two different windows 302 (e.g., inter-window communication).

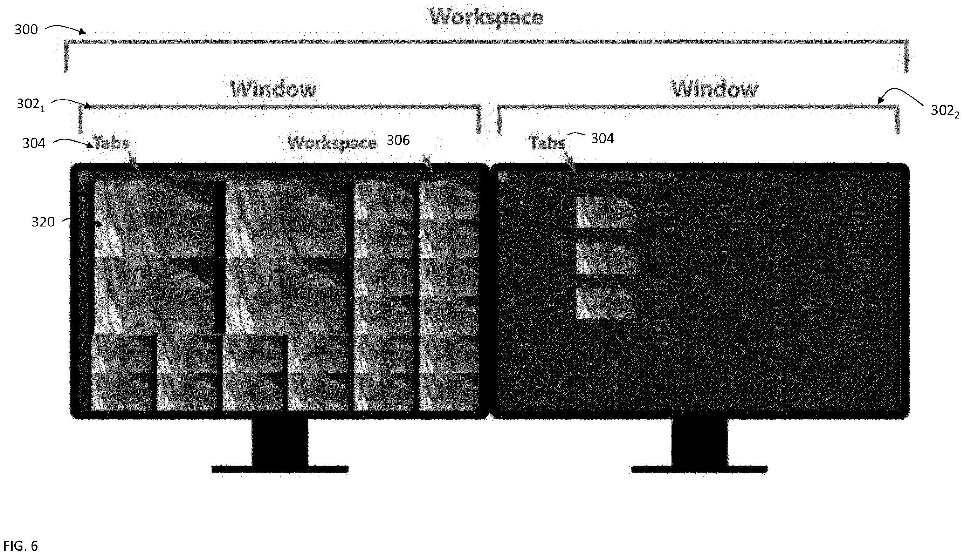

FIG. 6 depicts a multi-window workspace 300 in the user interface in an example embodiment. In FIG. 6, the workspace 300 includes two windows 302₁ and 3022. Each window 302₁ and 3022 may include one or more tabs 304. Each tab 304 may be populated with one or more components 320 as described above. The workplace icon 306 identifies the workplace 300. As noted above, the user interface workplace 300 allows for communication between all components 320. Components 320 in tab 304 of window 302₁ may communicate (e.g., intra-tab communication). Components 320 in separate tabs 304 of window 302₁ may communicate (e.g., intra-window communication). A component 320 window 302₁ may communicate with a component 320 window 302₂ (e.g., inter-window communication).

Embodiments of the present disclosure provide a user interface to a controller of a video monitoring system that is highly customizable to allow a user to create a workspace of window(s) and tab(s) to fulfill their needs.

As described above, embodiments can be in the form of processor-implemented processes and devices for practicing those processes, such as a processor in controller 110 and remote system 120. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into an executed by a processor, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations. Further, one of ordinary skill in the art will appreciate that the steps described in conjunction with the illustrative figures may be performed in other than the recited order, and that one or more steps illustrated may be optional.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method for customizing a user interface to a video monitoring system having a camera, the method comprising:
defining a window in a workspace;
creating a tab in the window;
assigning a component to the tab;
wherein the component comprises a camera component;
wherein the camera component displays video from the camera.

2. The method of claim 1 wherein:
wherein assigning the component to the tab comprises assigning a first component to the tab and assigning a second component to the tab;
wherein the first component in the tab and the second component in the tab are in communication.

3. The method of claim 1 or 2 wherein:
creating the tab in the window comprises creating a first tab and creating a second tab;
wherein assigning the component comprises assigning a first component to the first tab and assigning a second component to the second tab;
wherein the first component in the first tab and the second component in the second tab are in communication.

4. The method of any of the preceding claims wherein:
defining the window comprises defining a first window and defining a second window;
creating the tab comprises creating a first tab in the first window and creating a second tab in the second window;
wherein assigning the component comprises assigning a first component to the first tab of the first window and assigning a second component to the second tab of the second window;
wherein the first component in the first tab of the first window and the second component in the second tab of the second window are in communication.

5. The method of any of the preceding claims further comprising:
assigning a second component to the tab.

6. The method of claim 5 wherein the second component comprises a camera control component configured to control at least one parameter of the camera.

7. The method of claim 5 or 6 wherein the second component comprises a device listing component identifying devices in the video monitoring system.

8. The method of any of claims 5 to 7 wherein the second component comprises a settings component presenting settings configurable in the video monitoring system.

9. A video monitoring system comprising:
a camera;
a controller in communication with the camera, the controller configured to provide a user interface to a remote system, the user interface comprising:
a window in a workspace;
a tab in the window;
a component to the tab;
wherein the component comprises a camera component;
wherein the camera component displays video from the camera.

10. The video monitoring system of claim 9 wherein:
wherein the component comprises a first component in the tab and a second component in the tab;
wherein the first component in the tab and the second component in the tab are in communication.

11. The video monitoring system of claim 9 or 10 wherein:
the window comprises a first tab and a second tab;
wherein the component comprises a first component in the first tab and a second component in the second tab;
wherein the first component in the first tab and the second component in the second tab are in communication.

12. The video monitoring system of any of claims 9 to 11 wherein:
the window comprises a first window and a second window;
the tab comprises a first tab in the first window and a second tab in the second window;
the component comprises a first component in the first tab of the first window and a second component in the second tab of the second window;
wherein the first component in the first tab of the first window and the second component in the second tab of the second window are in communication.

13. The video monitoring system of any of claims 9 to 12 wherein:
the user interface includes a second component.

14. The video monitoring system of claim 13
wherein the second component comprises a camera control component configured to control at least one parameter of the camera; and/or
wherein the second component comprises a device listing component identifying devices in the video system; and/or
wherein the second component comprises a settings component presenting settings configurable in the video system.

15. A computer program product for customizing a user interface to a video monitoring system having a camera, the computer program product comprising a non-transitory computer readable storage medium having program instructions embodied therewith, the program instructions executable by a processor to cause the processor to implement operations comprising:
defining a window in a workspace;
creating a tab in the window;
assigning a component to the tab;
wherein the component comprises a camera component;
wherein the camera component displays video from the camera.
